(19) Europäisches Patentamt
European Patent Office
Office européen des brevets

(11) Numéro de publication: **0 256 896 A2**

(12) # DEMANDE DE BREVET EUROPEEN

(21) Numéro de dépôt: 87401480.6

(22) Date de dépôt: 26.06.87

(51) Int. Cl.³: C 07 C 91/06
C 07 C 31/02

(30) Priorité: 11.08.86 US 895560

(43) Date de publication de la demande:
24.02.88 Bulletin 88/8

(84) Etats contractants désignés:
AT BE CH DE FR GB IT LI NL SE

(71) Demandeur: RHONE-POULENC CHIMIE
25, quai Paul Doumer
F-92408 Courbevoie Cédex(FR)

(72) Inventeur: Gradeff, Peter S.
Black River
Pottersville(US)

(72) Inventeur: Schreiber, Fred G.
100 Lawrence Avenue
Highland Park New Jersey 08904(US)

(74) Mandataire: Dutruc-Rosset, Marie-Claude et al,
RHONE-POULENC INTERSERVICES Service Brevets
Chimie 25, Quai Paul Doumer
F-92408 Courbevoie Cédex(FR)

(54) **Alcanolatoamines cériques.**

(57) La présente invention concerne des composés organocériques et leur procédé d'obtention.

Les composés de l'invention répondent à la formule :

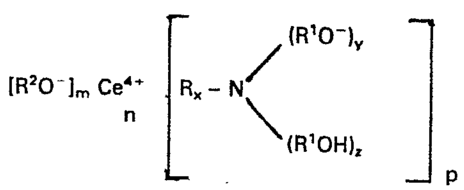

(I)

dans laquelle :

n et p sont chacun un nombre entier égal ou supérieur à 1,

$R^1$ est un groupe alkyle ayant de 1 à 20 atomes de carbone, ou un groupe $(R^3O\text{-})_a$ dans lequel R est un groupe alkyle ayant de 1 à 3 atomes de carbone et a un nombre entier compris entre 1 et 12,

R est un hydrogène ou un groupe alkyle ayant de 1 à 20 atomes de carbone,

$R^2$ est un groupe alkyle ayant de 1 à 20 atomes de carbone,

m est un nombre entier compris entre 0 et 3,

x est un nombre entier compris entre 0 et 2,

y est un nombre entier compris entre 1 et 3,

z est un nombre entier compris entre 0 et 2, sous réserve que $x + y + z = 3$ et $yp + m = 4n$.

EP 0 256 896 A2

Croydon Printing Company Ltd.

## ALCANOLATOAMINES CERIQUES

La présente invention a pour objet des composés organo-cériques. Plus précisément, elle concerne des alcanolatoamines cériques. Elle vise également leur procédé d'obtention.

Les métaux de terres rares ou lanthanides comprennent 15 éléments dont le cérium qui, à plusieurs titres, présente un intérêt particulier. Le cérium est le métal de terre rare le plus abondant. Il représente, en effet, environ 47 % de l'ensemble des métaux de terres rares que l'on trouve dans le sol. Il est trois fois plus abondant que les métaux tels que le magnésium et le plomb, deux fois plus que le cobalt et même plus abondant que l'étain. Le cérium présente deux valences, soit +3 [céreux, Ce(III)] et +4 [cérique, Ce(IV)]. Dans chaque cas, chimie et applications sont nettement différentes.

La préparation des dérivés organiques du $Ce^{4+}$ est difficile. En effet, les composants du système réactionnel ont tendance à s'oxyder avec réduction du $Ce^{4+}$ en $Ce^{3+}$ ainsi qu'on le décrit dans le brevet US 4 492 655. Cependant, les alcoxydes cériques sont stables. Bradley et al (J. Chem, Soc. 1956, 2260) ont été les premiers à les préparer selon un procédé qui requiert la préparation du complexe d'hexachlorodipyridirium cérique qui s'avère difficile.
On a décrit plus récemment, dans le brevet US 4 489 000, un procédé mettant en oeuvre du nitrate céri-ammoniacal.

L'un des objectifs de la présente invention est de fournir de nouveaux dérivés du cérium. Plus particulièrement, l'un des objectifs de la présente invention est de préparer des composés organo-cériques dans lesquels le cérium possède la valence +4.

Un autre objectif de la présente invention est de fournir une méthode de préparation de dérivés de composés du cérium dans lesquels la partie organique contient un groupe amino.

Enfin, un autre objectif de la présente invention est de fournir une classe de nouveaux composés cériques possédant des propriétés susceptibles d'être mises en oeuvre dans plusieurs applications.

L'invention concerne, à titre de produits industriels nouveaux, des dérivés de composés du cérium désignés par le terme "alcanolatoamines cériques".

On ne trouve aucun exemple de ces dérivés cériques dans la littérature. Il est décrit dans le Russian Journal of Inorganic Chemistry 14 (3) 1969, des composés chloro (aminoalcoolato) et nitrato (amino alcoolato) de cérium $^{3+}$ ainsi que d'autres lanthanides trivalents.

Dans ledit article, il est précisé que ces composés céreux sont insolubles dans le méthanol, l'acétone, l'éther et l'eau et répondent à la formule suivante :

$LnCl(OC_2H_4)_2NH$ et $Ln_2(NO_3)_3(OC_2H_4)_2$ NH $OC_2H_4NH$ $C_2H_4OH$

Les réactions entre les alcoxydes métalliques et les alcanolamines sont décrites par D.C. Bradley, P.C. Mehrotra et D.P. Gaur dans Metal Alkoxides, Academic Press 1978, pages 226-241.

En ce qui concerne les lanthanides, il est noté : "Une étude comparative de la réactivité des isopropoxydes de lanthanons, c'est-à-dire des isopropoxydes de gadolinium, erbium, ytterbium et yttrium, vis-à-vis de l'éthanolamine, a montré que seul le groupe hydroxyle de l'éthanolamine peut être remplacé par les groupes isopropoxy de ces lanthanons [175,176] qui ressemblent donc aux composés analogues trivalents de l'aluminium, du gallium ou du fer. Les réactions avec la diéthanolamine et la triéthanolamine sont similaires. Tous ces dérivés sont des solides faiblement solubles ou insolubles qui se décomposent lorsqu'on les chauffe sous vide. Les dérivés bis-(diéthoxyaminate) de tous ces éléments perdent une mole de diéthanolamine pour former des tris-(diéthoxyaminate) di-lanthanons lorsqu'ils sont chauffés sous pression réduite. [Formules omises]

En résumé, on note que les réactions des alcanolamines ont été étendues aux alcoxydes de bore, d'aluminium, de gallium, de silicium, de germanium, d'étain, de fer, de vanadium, de titane, de zirconium, de niobium, de tantale, d'antimoine, d'uranium et de lanthanons. Néanmoins, il reste encore beaucoup de travail à faire pour élucider les structures de ces composés intéressants".

Les références 175 et 176 citées ci-dessus sont des thèses Ph.D

de l'Université du Rajasthan, Jaipur, Inde (1970). Bradley et al mentionnent uniquement les isopropoxydes de Gd, Er, Yb et Y et les comparent aux composés analogues trivalents de l'aluminium, du gallium ou du fer.

La présente invention a pour objet des composés du cérium qui peuvent être appelés alcanolatoamines cériques ou aminealcoxydes de cérium. Lesdits composés de la présente invention peuvent répondre à la formule suivante :

$$[R^2O^-]_m \, Ce^{4+}_n \left[ R_x - N \begin{matrix} \diagup (R^1O^-)_y \\ \diagdown (R^1OH)_z \end{matrix} \right]_p \qquad (I)$$

dans laquelle :

- n et p sont chacun un nombre entier égal ou supérieur à 1, de préférence compris entre 1 et 20, et plus préférentiellement entre 1 et 10 ;
- $R^1$ est un groupe alkyle ayant de 1 à 20 atomes de carbone, de préférence de 1 à 10, plus préférentiellement de 1 à 6 et encore plus préférentiellement de 1 à 3 ou un groupe $(R^3O)_a$ dans lequel $R^3$ est un groupe alkyle ayant de 1 à 3 atomes de carbone et a un nombre entier compris entre 1 et 12.
- R est un hydrogène ou un groupe alkyle ayant de 1 à 20 atomes de carbone, de préférence de 1 à 10, plus préférentiellement de 1 à 6 et encore plus préférentiellement de 1 à 3 ou l'une de leurs combinaisons;
- $R^2$ est un groupe alkyle ayant de 1 à 20 atomes de carbone, de préférence de 1 à 10, plus préférentiellement de 1 à 6 et encore plus préférentiellement de 1 à 3 ;
- m est un nombre entier compris entre 0 et 3 ;
- x est un nombre entier compris entre 0 et 2 ;
- y est un nombre entier compris entre 1 et 3 ;
- z est un nombre entier compris entre 0 et 2, sous réserve que $x + y + z = 3$ et $yp + m = 4n$.

Lorsque n = 1, le composé est un monomère. Cependant, lorsque la partie aminealcoxyde possède deux fonctions (c'est-à-dire que y = 2)

ou trois fonctions, on peut être en présence d'un dimère ou d'un polymère.

Le produit de la présente invention est un monomère, dimère ou polymère cérique dans lequel le cation cérique présente la valence +4. Le cérium peut être lié ou associé à des groupes alcoxyde tels que $[R^2O^-]_m$ et $[R^1O^-]_y$.

Dans certaines conditions, l'ion cérique réagit plus vraisemblablement avec le groupe amine-alcoxyde ($R^1O$) qu'avec l'alcoxyde ($R^2O$). En l'occurence, on ne devrait pas s'attendre à trouver la présence de groupes $(R^1OH)_z$ dans le produit final à moins que tous les groupes alcoxyde $(R^2O)_m$ aient été déplacés. Ainsi, dans l'un des modes de réalisation de la présente invention, lorsque, dans la formule ci-dessus, z est supérieur ou égal à 1, m est égal à 0 et lorsque m est supérieur ou égal à 1, z est égal à 0.

On pense que le groupe amine participe et/ou contribue aussi à la fixation des ligands sur le cérium. La formule empirique ci-dessus reflète la relation ionique existant entre le cation cérique et les anions alcoxyde présents lorsqu'on exige que m + yp, nombre total d'alcoxydes présents, soit égal à 4n, "n" étant le nombre de cations cériques présents dans la molécule.

La classe des alcanolatoamines cériques de la présente invention peut correspondre à plusieurs structures comme mis en évidence ci-après.

Les composés qui font l'objet de la présente invention sont des dérivés et des mélanges de dérivés de produits préparés par réaction entre des alcanolamines et des alcoxydes cériques. Les alcanolamines que l'on met en oeuvre dans ces synthèses répondent à la formule suivante :

$R_xN(R^1OH)_a$ (II)

dans laquelle :

- R est l'hydrogène, un groupe alkyle linéaire ou ramifié ayant de 1 à 20 atomes de carbone, de préférence de 1 à 10, plus préférentiellement de 1 à 6, et encore plus préférentiellement de 1 à 3, ou l'une de leurs combinaisons;

- $R^1$ est un groupe alkyle, linéaire ou ramifié, ayant de 1 à 20 atomes de carbone, de préférence de 1 à 10, plus préférentiellement de 1 à 6 et encore plus préférentiellement de 1 à 3 et un groupe $(R^3O)_a$ dans lequel $R^3$ est un groupe alkyle ayant de 1 à 3 atomes de carbone et a un nombre entier compris entre 1 et 12 ;
- x est un nombre entier compris entre 0 et 2;
- q est un nombre entier compris entre 1 et 3, la somme q + x étant égale à 3.

A titre d'exemples de substituants R et $R^1$, on peut citer les groupes méthyle, éthyle, propyle, isopropyle, butyle, tert-butyle, isobutyle, pentyle, isopentyle, hexyle, éthyl-2 hexyle, octyle, etc.

Comme exemples d'alcanolamines préférées, on peut citer la monoéthanolamine, la diéthanolamine, la triéthanolamine, la N-méthyldiéthanolamine, la N-éthyldiéthanolamine, la N-propyldiéthanolamine, la N-isopropyldiéthanolamine, la N,N-diméthyléthanolamine, la N,N-diéthyléthanolamine, la N,N-dipropyléthanolamine, la N,N-diisopropyléthanolamine.

Lors de la préparation des alcanolatoamines cériques de l'invention, on fait réagir l'alcanolamine de formule (II) avec l'alcoxyde cérique de formule suivante :

$Ce(OR^2)_4$ (III)

dans laquelle $R^2$ est un groupe alkyle linéaire ou ramifié ayant de 1 à 20 atomes de carbone, de préférence de 1 à 10, plus préférentiellement de 1 à 6 et encore plus préférentiellement de 1 à 3 atomes de carbone.

L'alcoxyde cérique de départ peut être mis en oeuvre sous forme de solution ou de dispersion dans un solvant inerte tel que les éthers (par exemple les glymes), le tétrahydrofurane, le benzène, etc. On peut également faire appel, comme produits de départ, aux alcoxydes cériques qui sont décrits dans le brevet US 4 489 000 et qui font partie intégrante de la présente demande. Les alcoxydes cériques correspondent à ceux qui sont dérivés des alcools aliphatiques inférieurs tels que le méthanol, l'éthanol, le propanol, l'isopropanol, le butanol, l'isobutanol, le butanol secondaire, le

butanol tertiaire, le pentanol, l'isopentanol, le pentanol secondaire et le pentanol tertaire. Les alcoxydes cériques comprennent également les alcoxydes des alcools aliphatiques supérieurs.

Les alcoxydes cériques utilisés préférentiellement sont : le tétraméthoxyde cérique, le tétraéthoxyde cérique,le tétraisopropoxyde cérique, le tétrabutoxyde cérique.

Selon le procédé de l'invention, le rapport molaire entre l'alcoxyde cérique et l'alcanolamine peut varier dans de larges limites et est choisi, de préférence, de telle sorte que ledit rapport soit compris entre 1:0,3 et 1:4.

On précisera plus particulièrement que dans le cas de la mise en oeuvre d'une monoalcanolamine, le rapport molaire entre l'alcoxyde cérique et la monoalcanolamine varie préférentiellement de 1:1 à 1:4. Il est possible de mettre en oeuvre une quantité excédentaire de monoalcanolamine, mais cela ne présente aucun intérêt.

Dans le cas où l'on fait appel à une trialcanolamine, le rapport molaire entre l'alcoxyde cérique et la trialcanolamine est choisi de préférence de 1:0,3 à 1:1,2. Les réactifs peuvent être mis en oeuvre en une quantité excédentaire par rapport à la stoechiométrie. Toutefois, le plus souvent, il peut être souhaité de ne pas substituer tous les groupes alkoxy, mais seulement un ou plusieurs.

La plupart des alcanolamines que l'on met en oeuvre avec les alcoxydes cériques sont sous forme liquide ou solubles dans les solvants mentionnés ci-dessus. Généralement, les alcoxydes cériques et les alcanolamines réagissent spontanément à la température ambiante. Si l'un des réactifs, que ce soit l'alcoxyde ou l'alcanolamine, est liquide, on peut effectuer la réaction sans solvant. En général, l'ordre et la séquence d'addition des réactifs ne sont pas significatifs pour obtenir le composé selon la présente invention. Cependant, on estime que, dans certains cas, par exemple dans le cas d'un mélange insuffisant, l'addition goutte à goutte d'un réactif dans l'autre, on peut obtenir un produit final ayant un degré de ramification ou une configuration différents par rapport à l'ordre inversé d'addition des réactifs.

Il est possible d'effectuer une étape de purification ou de séparation de l'alcanolatoamine cérique à partir du mélange réactionnel ; cette étape reste facultative bien que les exemples comportent les phases de purification.

Le mélange réactionnel final contient le produit recherché en mélange avec l'alcool libéré et les solvants inertes. Dans la plupart des applications, il n'est pas nécessaire d'éliminer l'alcool et les solvants dans la mesure où ils ne sont pas indésirables et peuvent être tolérés.

On a trouvé que les composés obtenus à partir d'alcanolamines de formule (II) dans laquelle R est un hydrogène (amine secondaire) sont moins solubles dans les solvants habituels que les composés obtenus à partir d'amines tertiaires dans lesquelles R n'est pas un hydrogène.

Il est surprenant de constater que les composés selon la présente invention sont plus stables à l'hydrolyse et faciles à mettre en oeuvre comparativement aux alcoxydes cériques de départ. En raison de leur solubilité dans de nombreux solvants organiques, on peut envisager plusieurs applications importantes. Les composés selon la présente invention peuvent être employés, par exemple, dans des domaines spécialisés tels que la production de poudres céramiques, de films, d'agents de réticulation à action retardée, d'additifs pour plastiques, silicones, peintures et la préparation de catalyseurs.

De nombreuses réactions entre alcoxydes cériques et alcanolamines s'effectuent aisément à température ambiante bien que l'on considère qu'il puisse être opportun d'en conduire certaines à des températures élevées. Lorsque les réactions se font facilement à température ambiante, il n'est généralement pas nécessaire de chauffer pour accélérer les réactions. Dans ces réactions, le chauffage peut affecter la structure du produit réactionnel et, par conséquent, les propriétés des produits qui en résultent. C'est ainsi par exemple qu'une réaction effectuée à des températures élevées peut avoir tendance à favoriser la formation de dimères ou de polymères en plus des monomères.

Lorsque l'on met en oeuvre une alcanolamine de formule (II) dans laquelle q est supérieur à 1, on dispose dans l'alcanolamine d'un plus grand nombre de sites permettant de fixer un atome de cérium. C'est ainsi, par exemple, que l'un des produits possibles qui se forme, lorsque deux atomes de cérium se fixent à deux sites sur

chacune des deux molécules d'alcanolamine, est un dimère.

Dans le composé suivant, deux molécules d'alcanolamine sont liées à deux atomes de cérium donnant naissance à un dimère cyclique de formule suivante :

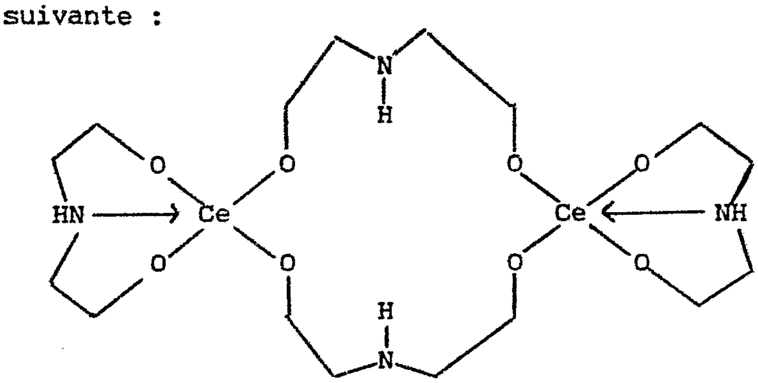

Dans l'autre cas, selon la formule (I), deux atomes de cérium peuvent se fixer aux deux sites disponibles d'une seule molécule d'alcanolamine afin de former un motif répétitif ayant une structure polymère plus ou moins linéaire ou ramifiée, comme le montre l'exemple suivant :

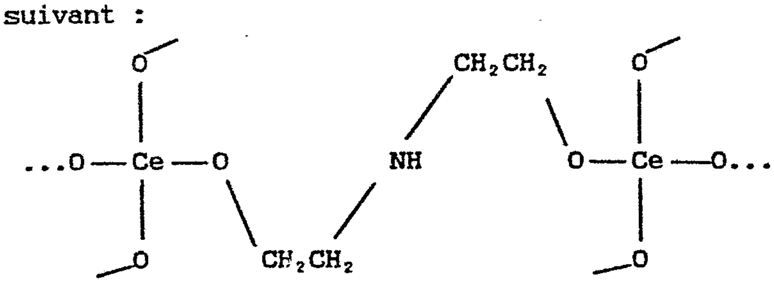

Les composés cériques obtenus peuvent, en fonction du nombre de groupes alcoxyde déplacés durant la réaction de synthèse, former des chélates, des dimères ou des polymères. Le degré de chélatation de ces composés affecte leur solubilité ainsi que leur réactivité. La réaction étant hétérogène, le produit résultant de ces réactions de synthèse peut être un mélange de composés de différentes structures.

Les exemples 1-15 ci-dessous illustrent les composés selon la présente invention qui ont été synthétisés à partir de réactions entre des tétraalcoxydes cériques et diverses alcanolamines mis en oeuvre dans différentes proportions. Les exemples 16-30 illustrent la synthèse d'autres composés dans le cadre de la présente invention. Les exemples suivants illustrent de manière non limitative les composés de la présente invention et leur mode de préparation.

Exemple 1

Réaction du tétra-isopropoxyde cérique avec un équivalent de triéthanolamine.

A température ambiante, on ajoute de la triéthanolamine (12,34 g, 0,0827 mole), fraîchement distillée, en solution dans 60 ml de diméthoxyéthane, à une solution d'isopropoxyde cérique (139,71 g, 0,0826 mole). On fait réagir le mélange pendant 25 minutes. Il se forme un précipité jaune dense qui se dissout totalement en 1 heure 30 minutes. On distille les gaz volatils sous pression réduite à 30°C et l'on obtient un solide jaune foncé, 29,39 g, dont le point de fusion est à 255° C et qui commence à se décomposer à 100° C. L'analyse élémentaire donne 40,05 % de cérium, 30,47 % de carbone, 4,95 % d'hydrogène, 5,59 % d'azote. Le solide est soluble dans le méthanol, le nitrométhane, le toluène, l'alcool isopropylique, le benzène et l'eau.

Exemple 2

Réaction du tétra-isopropoxyde cérique avec deux équivalents de triéthanolamine.

A température ambiante, on ajoute de la triéthanolamine (25,16 g, 0,1686 mole), fraîchement distillée, en solution dans 60 ml de diméthoxyéthane, à une solution d'isopropoxyde cérique (142,53 g, 0,0842 mole). On fait réagir le mélange pendant 1 heure 48 minutes. Il se forme un précipité jaune dense qui subsiste le lendemain. On distille les gaz volatils sous pression réduite à 30° C et l'on obtient un solide jaune, 38,50 g, dont le point de fusion est à 90°C, avec décomposition. Le dosage du solide donne 30,65 % de $Ce^{4+}$ ; l'analyse élémentaire donne 30,84 % de cérium, 33,91 % de carbone, 6,29 % d'hydrogène et 7,11 % d'azote. Le solide est soluble dans le méthanol, le nitrométhane, le toluène, l'alcool isopropylique, le benzène et l'eau.

Exemple 3

Réaction du tétra-isopropoxyde cérique avec un équivalent de diéthanolamine.

On ajoute de la diéthanolamine (1,34 g, 0,0127 mole), fraîchement distillée, à une solution d'isopropoxyde cérique (21,55 g, 0,0127 mole). Un solide jaune clair précipite. Il se dissout pendant la nuit pour donner une solution orange clair. Après traitement comme ci-dessus on obtient des paillettes brillantes jaune brun, rendement : 4,65 g. Fusion et décomposition démarrent à 80° C, mais il reste toujours de la matière solide jusqu'à 250° C. Le dosage du solide donne 36,60 % de $Ce^{4+}$ ; l'analyse élémentaire donne 43,21 % de cérium, 23,70 % de carbone, 4,81 % d'hydrogène, 4,76 % d'azote.

L'analyse du distillat par chromatographie en phase gazeuse confirme, dans les limites de l'erreur expérimentale, le déplacement théorique, à savoir que la diéthanolamine déplace deux équivalents d'alcool isopropylique (IPA) par mole de cérium.

Exemple 4

Réaction du tétra-isopropoxyde cérique avec deux équivalents de diéthanolamine.

A température ambiante, on ajoute de la diéthanolamine (2,35 g, 0,0224 mole), fraîchement distillée, à une solution d'isopropoxyde cérique (18,93 g, 0,0112 mole). On obtient une bouillie jaune clair. On chasse par évaporation les gaz volatils et l'on obtient une poudre jaune très fine, 4,20 g. Le produit ne fond pas, mais se décompose progressivement lorsqu'on le porte à 175° C.

Le dosage du solide donne 34,66 % de $Ce^{4+}$ ; l'analyse élémentaire donne 39,14 % de cérium, 27 % de carbone, 5,30 % d'hydrogène, 8,01 % d'azote.

L'analyse du distillat par chromatographie en phase gazeuse confirme, dans les limites de l'erreur expérimentale, le déplacement théorique, à savoir que la diéthanolamine déplace 4 équivalents d'IPA par mole de cérium.

Le produit est soluble dans le diméthylformamide.

Exemple 5

Réaction du tétra-isopropoxyde cérique avec un équivalent d'éthanolamine.

On ajoute de l'éthanolamine (0,83 g, 0,0136 mole), fraîchement distillée, mise en oeuvre sans solvant, à une solution d'isopropoxyde cérique (22,74 g, 0,0134 mole) et l'on obtient une solution orange clair. On chasse par évaporation les gaz volatils et l'on obtient 5,11 g d'un solide vitreux de couleur havane.

Le point de fusion se situe à 155° C, avec décomposition. Le solide est soluble dans le toluène, l'isopropanol et le diméthylformamide.

L'analyse élémentaire donne 40,63 % de cérium, 27,41 % de carbone, 5,78 % d'hydrogène et 4,41 % d'azote.

L'analyse du distillat par chromatographie en phase gazeuse confirme, dans les limites de l'erreur expérimentale, le déplacement théorique, à savoir que l'éthanolamine déplace 1 équivalent d'IPA par mole de cérium.

Exemple 6

Réaction du tétra-isopropoxyde cérique avec deux équivalents d'éthanolamine.

On ajoute de l'éthanolamine (1,56 g, 0,0255 mole), fraîchement distillée, mise en oeuvre sans solvant, à une solution d'isopropoxyde cérique (21,54 g, 0,0127 mole) et l'on obtient une solution brun clair. On chasse par évaporation les gaz volatils et l'on obtient un solide jaune pâle, 4,92 g. Le point de fusion se situe à 250° C, avec décomposition. Le solide est soluble dans l'isopropanol est le n-butanol.

L'analyse élémentaire donne 42,34 % de cérium, 21,62 % de carbone, 4,82 % d'hydrogène et 8,61 % d'azote.

L'analyse du distillat par chromatographie en phase gazeuse confirme, dans les limites de l'erreur expérimentale, le déplacement théorique, à savoir que l'éthanolamine déplace 2 équivalents d'IPA par mole de cérium.

Exemple 7

Réaction du tétra-isopropoxyde cérique avec trois équivalents d'éthanolamine.

On ajoute de l'éthanolamine (2,41 g, 0,0394 mole), fraîchement distillée, mise en oeuvre sans solvant, à une solution d'isopropoxyde cérique (22,07 g, 0,0130 mole) et l'on obtient une solution brun clair. On chasse par évaporation les gaz volatils et l'on obtient un solide jaune pâle, 4,99 g.

Le produit ne fond pas au-dessous de 250° C. Le solide est soluble dans l'isopropanol et le n-butanol.

L'analyse élémentaire donne 48,71 % de cendres (39,64 % de cérium), 22,09 % de carbone, 5,38 % d'hydrogène et 10,70 % d'azote.

L'analyse du distillat par chromatographie en phase gazeuse confirme, dans les limites de l'erreur expérimentale, le déplacement théorique, à savoir que l'éthanolamine déplace 3 équivalents d'IPA par mole de cérium.

Exemple 8

Réaction du tétra-isopropoxyde cérique avec quatre équivalents d'éthanolamine.

On ajoute de l'éthanolamine (2,95 g, 0,0483 mole), fraîchement distillée, mise en oeuvre sans solvant, à une solution d'isopropoxyde cérique (20,36 g, 0,0120 mole) et l'on obtient une solution brun clair. On chasse par évaporation les gaz volatils et l'on obtient un solide jaune pâle, 4,84 g. Le produit fond à 95° C, en se décomposant. Le solide est soluble dans l'isopropanol et le n-butanol.

L'analyse élémentaire donne 41,68 % de cérium, 20,27 % de carbone, 5,01 % d'hydrogène et 10,52 % d'azote.

L'analyse du distillat par chromatographie en phase gazeuse confirme, dans les limites de l'erreur expérimentale, le déplacement théorique, à savoir que l'éthanolamine déplace 4 équivalents d'IPA par mole de cérium.

Exemple 9

Réaction du tétra-isopropoxyde cérique avec un équivalent de N,N-diéthyl-éthanolamine.

On ajoute de la N,N-diéthyl-éthanolamine (1,77 g, 0,0151 mole), fraîchement distillée, mise en oeuvre sans solvant, à une solution d'isopropoxyde cérique (25,45 g, 0,0150 mole) et l'on obtient une solution orange clair. Après traitement, on obtient un résidu rouge orangé extrêmement visqueux, 6,58 g.

L'analyse élémentaire donne 34,20 % de cérium, 31,96 % de carbone, 6,14 % d'hydrogène et 4,08 % d'azote.

L'analyse du distillat par chromatographie en phase gazeuse confirme, dans les limites de l'erreur expérimentale, le déplacement théorique, à savoir que l'amine déplace 1 équivalent d'IPA par mole de cérium.

Le produit est très soluble dans le toluène, l'hexane, l'alcool isopropylique, le diglyme, le DMF, l'alcool n-butylique et les essences de pétrole.

Exemple 10

Réaction du tétra-isopropoxyde cérique avec deux équivalents de N,N-diéthyléthanolamine.

On ajoute de la N,N-diéthyléthanolamine (3,87 g, 0,0330 mole), fraîchement distillée, à une solution d'isopropoxyde cérique (27,77 g, 0,0164 mole) et l'on obtient une solution orange clair. Après traitement, on obtient un résidu rouge orangé extrêmement visqueux, 8,03 g.

L'analyse élémentaire donne 31,53 % de cérium, 38,95 % de carbone, 7,93 % d'hydrogène et 6,09 % d'azote.

L'analyse du distillat par chromatographie en phase gazeuse confirme, dans les limites de l'erreur expérimentale, le déplacement théorique, à savoir que la diéthyléthanolamine déplace 2 équivalents d'IPA par mole de cérium. Le produit présente les mêmes solubilités que celui de d'exemple 9 de rapport 1:1.

Exemple 11

Réaction du tétra-isopropoxyde cérique avec trois équivalents de N,N-diéthyléthanolamine.

On ajoute de la N,N-diéthyléthanolamine (4,92 g, 0,0420 mole), fraichement distillée, à une solution d'isopropoxyde cérique (23,59 g, 0,0139 mole) et l'on obtient une solution orange clair. Après traitement, on obtient un résidu rouge orangé visqueux, 7,63 g.

Le dosage du solide donne 23,70 % de $Ce^{+4}$, l'analyse élémentaire donne 25,81 % de cérium, 43,79 % de carbone, 8,23 % d'hydrogène et 7,78 % d'azote.

L'analyse du distillat par chromatographie en phase gazeuse confirme, dans les limites de l'erreur expérimentale, le déplacement théorique, à savoir que la diéthyléthanolamine déplace 3 équivalents d'IPA par mole de cérium.

Le produit présente les mêmes solubilités que le produit de l'exemple 9 de rapport 1:1.

Exemple 12

Réaction du tétra-isopropoxyde cérique avec quatre équivalents de N,N-diéthyléthanolamine.

On ajoute de la N,N-diéthyléthanolamine (6,63 g, 0,0566 mole), fraîchement distillée, à une solution d'isopropoxyde cérique (23,83 g, 0,0014 mole) et l'on obtient une solution orange clair. Après traitement, on obtient un fluide rouge orangé qui peut couler, 7,63 g.

L'analyse élémentaire donne 30,72 % de cendres (25,01 % de cérium), 42,13 % de carbone, 8,55 % d'hydrogène et 8,06 % d'azote.

L'analyse du distillat par chromatographie en phase gazeuse confirme, dans les limites de l'erreur expérimentale, le déplacement théorique, à savoir que la diéthyléthanolamine déplace 4 équivalents d'IPA par mole de cérium.

Ce produit présente les mêmes solubilités que le produit de l'exemple 9 de rapport 1:1.

Exemple 13

Réaction du tétra-isopropoxyde cérique avec un équivalent de N-éthyldiéthanolamine.

On ajoute de la N-éthyldiéthanolamine (2,25 g, 0,0169 mole), fraîchement distillée, à une solution d'isopropoxyde cérique (28,30 g, 0,0167 mole) et l'on obtient un précipité d'un jaune brillant. Après évaporation des gaz volatils, il reste un solide jaune, 6,63 g, dont le point de fusion est à 240° C avec décomposition.

L'analyse élémentaire donne 39,29 % de cérium, 32,33 % de carbone, 5,92 % d'hydrogène et 4,20 % d'azote.

L'analyse du distillat par chromatographie en phase gazeuse confirme, dans les limites de l'erreur expérimentale, le déplacement théorique, à savoir que l'éthyldiéthanolamine déplace 2 équivalents d'IPA par mole de cérium.

Ce produit est soluble dans le toluène, l'IPA, le DMF, le n-butanol et les distillats du pétrole.

Exemple 14

Réaction du tétra-isopropoxyde cérique avec deux équivalents de N-éthyldiéthanolamine.

On ajoute de la N-éthyldiéthanolamine (3,49 g, 0,0262 mole), fraîchement distillée, à une solution d'isopropoxyde cérique (22,04 g, 0,0132 mole) et l'on obtient une solution rouge orangé. Après évaporation des gaz volatils, on obtient des paillettes jaune orangé, 5,96 g, dont le point de fusion est de l'ordre de 80 à 140° C avec décomposition.

L'analyse élémentaire donne 33,88 % de cérium, 34,73 % de carbone, 6,26 % d'hydrogène et 6,90 % d'azote.

L'analyse du distillat par chromatographie en phase gazeuse confirme, dans les limites de l'erreur expérimentale, le déplacement théorique, à savoir que l'éthyldiéthanolamine déplace 4 équivalents d'IPA par mole de cérium.

Ce produit est soluble dans le toluène, l'hexane, l'IPA, le diglyme, l'acétonitrile, le DMF et le n-butanol.

Exemple 15

Réaction du tétra-méthoxyde cérique avec 4,2 équivalents de N,N-diéthyléthanolamine.

On met le tétraméthoxyde cérique (0,00690 mole) en suspension dans 30 ml de diméthoxyéthane. On y ajoute 10 ml d'une solution de 0,0296 mole de N,N-diéthyléthanolamine dans le DME. En 10 minutes, la bouillie de méthoxyde jaune brillant se transforme en une solution translucide d'un orange intense. Le traitement donne un produit ayant les mêmes caractéristiques que celui de l'exemple 12.

TABLEAU I

| EXEMPLE | R x N(R¹OH)q alcanolamine | | | | Ce[OR²]₄ alcoxyde cérique | Rapport alcoxyde cérique/ alcanolamine | Déplacement théorique de IPA par mole Ce |
|---|---|---|---|---|---|---|---|
| | $R^1$ | R | q | x | $R^2$ | | |
| 16 | n-propyl | éthyl | 1 | 2 | isopropyl | 1:1 | 1 |
| 17 | n-butyl | éthyl | 1 | 2 | isopropyl | 1:2 | 2 |
| 18 | isopentyl | éthyl | 1 | 2 | isopropyl | 1:2 | 2 |
| 19 | éthoxyethyl | éthyl | 1 | 2 | isopropyl | 1:1 | 1 |
| 20 | n-propyl | éthyl | 1 | 2 | isooctyl | 1:1 | 1 |
| 21 | n-butyl | H | 1 | 2 | isopropyl | 1:1 | 1 |
| 22 | n-hexyl | H | 1 | 2 | éthyl | 1:2 | 2 |
| 23 | n-propyl | propyl | 1 | 2 | éthyl | 1:1 | 1 |
| 24 | éthyl | éthyl | 2 | 1 | n-butyl | 1:2 | 4 |
| 25 | éthyl | butyl | 2 | 1 | éthyl | 1:2 | 4 |
| 26 | éthyl | pentyl | 1 | 2 | isopropyl | 1:1 | 1 |
| 27 | décyl | éthyl | 2 | 1 | isopropyl | 1:1 | 2 |
| 28 | propyl | n-hexyl | 2 | 1 | isopropyl | 1:1 | 2 |
| 29 | éthyl | éthyl | 1 | 2 | n-hexyl | 1:2 | 2 |
| 30 | éthyl | butyl | 1 | 2 | n-pentyl | 1:3 | 3 |

REVENDICATIONS

1. Composé de cérium de formule

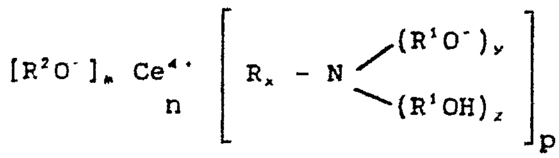
(I)

dans laquelle :

- n et p sont chacun un nombre entier égal ou supérieur à 1,
- $R^1$ est un groupe alkyle ayant de 1 à 20 atomes de carbone, ou un groupe $(R^3O)_a$ dans lequel R est un groupe alkyle ayant de 1 à 3 atomes de carbone et a un nombre entier compris entre 1 et 12,
- R est un hydrogène ou un groupe alkyle ayant de 1 à 20 atomes de carbone,
- $R^2$ est un groupe alkyle ayant de 1 à 20 atomes de carbone,
- m est un nombre entier compris entre 0 et 3,
- x est un nombre entier compris entre 0 et 2,
- y est un nombre entier compris entre 1 et 3,
- z est un nombre entier compris entre 0 et 2, sous réserve que $x + y + z = 3$ et $yp + m = 4n$.

2. Composé selon la revendication 1 par le fait qu'il répond à la formule (I) dans laquelle R, $R^1$, $R^2$, identiques ou différents, représentent un groupe alkyle ayant de 1 à 10 atomes de carbone.

3. Composé selon l'une des revendications 1 et 2 caractérisé par le fait qu'il répond à la formule (I) dans laquelle R, $R^1$, $R^2$, identiques ou différents, représentent un groupe alkyle ayant de 1 à 6 atomes de carbone.

4. Composé selon l'une des revendications 1 à 3 caractérisé par le fait qu'il répond à la formule (I) dans laquelle R, $R^1$, $R^2$, identiques ou différents, représentent un groupe alkyle ayant de 1 à 3 atomes de carbone.

5. Composé selon l'une des revendications 1 à 4 caractérisé par le fait qu'il répond à la formule (I) dans laquelle R est un hydrogène.

6. Composé selon l'une des revendications 1 à 5 caractérisé par le fait qu'il répond à la formule (I) dans laquelle n et p sont égaux à un nombre entier compris entre 1 et 20.

7. Composé selon l'une des revendications 1 à 6 caractérisé par le fait qu'il répond à la formule (I) dans laquelle n et p sont égaux à un nombre entier compris entre 1 et 10.

8. Composé selon l'une des revendications 1 à 7 caractérisé par le fait qu'il répond à la formule (I) dans laquelle x = 0.

9. Composé selon l'une des revendications 1 à 8 caractérisé par le fait qu'il répond à la formule (I) dans laquelle m = 0.

10. Composé selon l'une des revendications 1 à 8 caractérisé par le fait qu'il répond à la formule (I) dans laquelle m = 1.

11. Composé selon l'une des revendications 1 à 8 caractérisé par le fait qu'il répond à la formule (I) dans laquelle m = 2.

12. Composé selon l'une des revendications 1 à 8 caractérisé par le fait qu'il répond à la formule (I) dans laquelle m = 3.

13. Composé selon l'une des revendications 1 à 12 caractérisé par le fait qu'il répond à la formule (I) dans laquelle z = 0.

14. Composé selon la revendication 1 caractérisé par le fait qu'il est un monomère répondant à la formule (I) dans laquelle n est égal à 1.

15. Composé selon la revendication 1 caractérisé par le fait qu'il est un dimère.

16. Composé selon la revendication 1 caractérisé par le fait qu'il est un polymère.

17. Procédé de préparation de l'alcanolatoamine cérique décrit dans l'une des revendications 1 à 16 caractérisé par le fait qu'il consiste à faire réagir :

- (i) une alcanolamine de formule :

$$R_xN(R^1OH)_q \qquad (II)$$

dans laquelle :

- R est l'hydrogène ou un groupe alkyle ayant de 1 à 20 atomes de carbone ;
- $R^1$ est un groupe alkyle ayant de 1 à 20 atomes de carbone ou un groupe $(R^3O)_a$ dans lequel $R^3$ est un groupe alkyle ayant de 1 à 3 atomes de carbone et a un nombre entier compris entre 1 et 12 ;
- x est un nombre entier compris entre 0 et 2 ;
- q est un nombre entier compris entre 1 et 3, la somme q + x étant égale à 3.

avec

- (ii) un alcoxyde cérique de formule suivante :

  $Ce(OR^2)_4$ (III)

  dans laquelle $R^2$ est un groupe alkyle ayant de 1 à 20 atomes de carbone.

18. Procédé selon la revendication 17 caractérisé par le fait que l'alcanolamine répond à la formule (II) dans laquelle R, $R^1$, identiques ou différents, représentent de 1 à 10 atomes de carbone.

19. Procédé selon l'une des revendications 17 et 18 caractérisé par le fait que l'alcanolamine répond à la formule (II) dans laquelle R, $R^1$, identiques ou différents, représentent de 1 à 6 atomes de carbone.

20. Procédé selon l'une des revendications 17 à 19 caractérisé par le fait que l'alcanolamine répond à la formule (II) dans laquelle R, $R^1$, identiques ou différents, représentent de 1 à 3 atomes de carbone.

21. Procédé selon l'une des revendications 17 à 20 caractérisé par le fait que l'alcoxyde cérique répond à la formule (III) dans laquelle $R^2$ représente de 1 à 10 atomes de carbone.

22. Procédé selon l'une des revendications 17 à 21 caractérisé par le fait que l'alcoxyde cérique répond à la formule (III) dans laquelle $R^2$ représente de 1 à 6 atomes de carbone.

23. Procédé selon l'une des revendications 17 à 22 caractérisé par le fait que l'alcoxyde cérique répond à la formule (III) dans laquelle $R^2$ représente de 1 à 3 atomes de carbone.

24. Procédé selon l'une des revendications 17 à 23 caractérisé par le fait que l'alcanolamine répond à la formule (II) dans laquelle x est égal à 0.

25. Procédé selon l'une des revendications 17 à 24 caractérisé par le fait que l'alcanolamine est la monoéthanolamine, la diéthanolamine, la triéthanolamine, la N-méthyldiéthanolamine, la N-éthyldiéthanolamine, la N-propyldiéthanolamine, la N-isopropyldiéthanolamine, la N,N-diméthyléthanolamine, la N,N-diéthyléthanolamine, la N,N-dipropyléthanolamine, la N,N-diisopropyléthanolamine.

26. Procédé selon l'une des revendications 17 à 25 caractérisé parle fait que l'alcoxyde cérique est le tétraméthoxyde cérique, le tétraéthoxyde cérique,le tétraisopropoxyde cérique, le tétrabutoxyde cérique.

27. Procédé selon la revendication 17 caractérisé par le fait que le rapport molaire de l'alcoxyde cérique et l'alcanolamine est compris entre 1:0,3 et 1:4.

28. Procédé selon la revendication 17 caractérisé par le fait que l'alcanolamine est en excès par rapport à la quantité stoechiométrique.

29. Procédé selon la revendication 17 caractérisé par le fait que l'alcoxyde cérique est en excès par rapport à la quantité stoechiométrique.

30. Procédé selon la revendication 17 caractérisé par le fait que ladite réaction est effectuée à la température ambiante.

31. Procédé selon la revendication 17 caractérisé par le fait que le mélange réactionnel comporte un solvant inerte.

32. Procédé selon la revendication 17 caractérisé par le fait que l'on ajoute une alcanolamine de formule (II), dans laquelle q est égal à 2 ou 3, goutte à goutte à l'alcoxyde cérique.

33. Procédé selon la revendication 17 caractérisé par le fait que l'on sépare le produit réactionnel, à savoir l'alcanolatoamine cérique, du mélange réactionnel par évaporation ou distillation.

34. Composition comprenant les produits résultant du procédé décrit dans l'une des revendications 17 à 33.

35. Alcanolatoamine cérique caractérisée par le fait qu'elle est obtenue suivant le procédé selon la revendication 17.

36. Alcanolatoamine cérique caractérisée par le fait qu'elle est obtenue suivant le procédé selon la revendication 20.

37. Alcanolatoamine cérique caractérisée par le fait qu'elle est obtenue suivant le procédé selon la revendication 23.

38. Alcanolatoamine cérique caractérisée par le fait qu'elle est obtenue suivant le procédé selon la revendication 24.